# EUROPÄISCHE PATENTSCHRIFT

(11) **EP 2 307 293 B1**
(45) Veröffentlichungstag und Bekanntmachung des Hinweises auf die Patenterteilung: **09.01.2013**
(21) Anmeldenummer: 09776860.0
(22) Anmeldetag: 27.06.2009
(51) Int. Cl.: B65G 17/32, B65G 47/84, B67C 3/24

(54) **VERFAHREN ZUR HANDHABUNG VON BEHÄLTERN WÄHREND DES TRANSPORTES DURCH ABFÜLLANLAGEN**
METHOD FOR HANDLING CONTAINERS DURING TRANSPORT THROUGH FILLING STATIONS
PROCÉDÉ POUR MANIPULER DES CONTENANTS PENDANT LEUR TRANSPORT DANS DES INSTALLATIONS DE REMPLISSAGE

(30) Priorität: 25.07.2008 DE 102008035004
(43) Veröffentlichungstag der Anmeldung: 13.04.2011
(73) Patentinhaber: KHS GmbH, 44143 Dortmund (DE)
(72) Erfinder: FAHLDIECK, Andreas, 55743 Idar-Oberstein (DE); SÜTHER, Werner, 55452 Windesheim (DE)
(86) Internationale Anmeldenummer: PCT/EP2009/004656
(87) Internationale Veröffentlichungsnummer: WO 2010/009796

(56) Entgegenhaltungen:
- DE-A1- 4 131 699
- DE-A1-102005 002 715
- DE-B3-102004 034 306
- DE-U1- 20 001 408
- US-A- 3 941 237
- US-A- 4 664 248
- US-B1- 6 257 806

## Beschreibung

Die Erfindung richtet sich auf ein Halte- und Klammersystem zur Handhabung von Behältern, insbesondere von Behältern aus Kunststoff, wie z. B. PB oder PET, oder von Beutelverpackungen mit Verschlusselementen der im Oberbegriff des Anspruches 1 angegebenen Gattung, sowie auf ein Verfahren, wie im Oberbegriff des Anspruchs 9 angegeben. Ein derartiges Halte-und Klammersystem sowie ein derartiges Verfahren sind bereits aus US-B-6 257 806 bekannt.

In derartigen Anlagen, beispielsweise Flaschenabfüllanlagen, werden die Behältern mittels unterschiedlichster Fördersysteme, wie z.B. mit Greifern versehenen Bändern, sogenannten Flaschensternen, Transportschnecken od. dgl., bewegt (DE 41 31 699 A), wobei je nach notwendiger Position der Flasche diese auch auf den Kopf geschwenkt werden muss und wieder zurück. Diese Bewegungsvielfalt bedingt, dass alle in einer derartigen Anlage vorhandenen Tellsysteme synchronisiert werden müssen, es müssen teilweise Stau- und Wartestrecken eingebaut werden od. dgl. mehr.

Dabei werden in der Regel zunächst die leeren Flaschen sogenannten Rinsern, d.h. Maschinen zum Ausspülen und Ausblasen der Flaschen, zugeführt. Da beispielsweise Reinigungsmittel von unten eingesprüht werden, müssen die Flaschen zunächst gewendet werden. Verlassen die gereinigten Flaschen den Rinser, werden sie dem Füller zugeführt, was bedingt, dass sie wieder zurückgeschwenkt werden müssen. Sie verlassen dann die Füllanlage, werden einer Vorrichtung zum Verschließen der Flaschen und schließlich einer Etikettiermaschine zugeführt, um dann das System zu verlassen, um nur ein Beispiel zu nennen.

Hier setzt die Erfindung an, deren Aufgabe darin besteht, den Flaschentransport stark zu vereinfachen, Insbesondere Schnittstellen zwischen den einzelnen Anlageteilen, die auf die jeweilige Flaschengröße abgestimmt sein müssen, zu vermeiden.

Mit einer Halte- und Klammersystem nach Anspruch 1 und einem Verfahren nach Anspruch 9 wird diese Aufgabe gemäß der Erfindung dadurch gelöst, dass die Förderung des Behälters dieses Halteelement an dem Behälter mindestens auf einer Teilstrecke verbleibt und unmittelbar bewegt und manipuliert wird, wobei die eine Teilstrecke mindestens über einen Übergabebereich verläuft und der Behälter und das Halteelement am Ende des Behandlungsvorganges oder der Teilstrecke voneinander getrennt werden.

Die Zuordnung eines für den weiteren Transport zu manipulierenden Halteelementes zu z.B. einer Flasche bietet eine Fülle von Vorteilen. So muss jede Schnittstelle in sämtlichen Anlageteilen nicht mehr auf unterschiedliche Flaschen abgestimmt werden, sondern lediglich auf das Halteelement, d.h. im Rinser müssen nicht mehr die Flaschenklammern, im Füller nicht mehr die Flaschenauflage und im Verschließer die Spikes und in der Umetikettiermaschine nicht mehr die Teller entsprechend abgestimmt werden. Alles dies kann auf das jeweilige Halteelement abgestimmt werden.

Ausgestaltungen der Erfindung ergeben sich aus den Unteransprüchen. Dabei kann vorgesehen sein, dass das Halteelement den Behälter mindestens im Hals- oder Verschlussbereich hält.

Darüber hinaus ist auch vorgesehen, dass das Halteelement in der Anlage alle zur Förderung notwendigen Bewegungen vollzieht, insbesondere dreidimensional bewegt wird.

In weiterer Ausgestaltung sieht die Erfindung auch vor, dass das Halteelement im Rinser, im Füller, im Verschließer, im Etikettierer od. dgl. mit dem zugeordneten Behälter gefördert wird, wobei Dreh- und Schwenkbewegungen des Halteelementes einschließlich des Behälters durchgeführt werden.

Eine zweckmäßige Weiterbildung der Erfindung ergibt sich dadurch, dass das Halteelement zwischen Behälterentnahme und neuerlicher Behälteraufnahme durch eine Reinigungsstrecke geführt wird.

Die Erfindung bietet einen zusätzlichen weiteren Vorteil, dass die entsprechenden Anlagen jeweils sehr einfach auf z.B. unterschiedliche Flaschengrößen, Flaschenhalsgestaltungen u. dgl. mehr angepasst werden können, da es lediglich des Austausches eines entsprechenden Satzes an Halteelementen bedarf, um neue Flaschenformen, Flaschenhalsgestaltungen u. dgl, manipulleren zu können. Hierzu sieht die Erfindung vor, dass bei Wechsel der Flaschenformate die den Formaten entsprechenden Halteelemente ausgetauscht werden.

Zweckmäßig kann dabei auch vorgesehen sein, dass die ausgetauschten Halteelemente einer Parkzone, einem Magazin od. dgl. zugeführt werden.

Die erkennbaren Vorteile der erfindungsgemäßen Verfahrensweise bestehen somit darin, dass sich eine starke Reduzierung der Kosten und des Konstruktionsaufwandes durch Immer gleiche Formtelle ergibt für eine Gesamtanlage und die Einzelmaschinen, Insbesondere da die Schnittstellen immer gleich bleiben. Das Schwenken beispielsweise vor dem Rinser wird stark vereinfacht, etwa durch Schwenken des Bandes, so dass sich kleine Rinser ergeben. Auch verringern sich die Probleme des Flaschentransportes insgesamt, so dass es zu weniger Zerstörungen der Flaschen kommen kann; Vortische, Sterne, Überleitungskurven entfallen ebenso wie entsprechende Antriebe.

Wie oben schon erwähnt lässt sich eine so arbeitende Anlage auf verschiedene Behälter- bzw. Flaschengrößen leichter umrüsten. Wenn die Elemente zwischen den Anlageteilen nicht auf Teilung bleiben, können die Anlageteile Rinser, Füller etc. auch unterschiedlich sein, wobei sich insbesondere auch größere Freiheiten über eine andere Planung hinsichtlich der Maschinenaufstellung ergeben, so dass auch schwierige Abstandsverhältnisse der Anlage leicht berücksichtigt werden können.

Um der oben genannten Aufgabe gerecht zu werden, sieht die Erfindung entsprechend gestaltete Halteelemente vor, die zum Teil mit Zusatzeinrichtungen versehen sein können. Entsprechende maschinengebundene Halteelemente sind z.B. aus der DE 10 2005 002 715 A oder der DE 10 2004 034 306 B bekannt, um nur einige Beispiele zu nennen. nur einige Beispiele zu nennen.

Vorteilhaft ist nach der Erfindung vorgesehen, dass ein derartiges Halteelement sich durch eine Fixiereinrichtung zur Befestigung eines lösbar verbindbaren Stützelementes zur wenigstens zweitweisen Mitführung mit dem Halteelement auszeichnet, wobei das Stützelement einen Träger für den Behälterboden aufweist.

Derartige Stützelemente sind insbesondere im Bereich des Füllers einer derartigen Flasche zweckmäßig.

Dabei kann vorgesehen sein, dass der Träger als den Behälterboden ganz oder teilweise überdeckendes Maschinenelement ausgebildet ist und/oder die Trägerfläche für den Behälterboden als Wechsel-/Verschleißteil ausgebildet ist, wobei auch vorgesehen sein kann, diese stark beanspruchte Trägerfläche für den Behälterboden aus einem gleitfähigen Material auszubilden, etwa aus einem hochgleitfähigen Kunststoff.

Um beim Füllvorgang und der weiteren Behandlungen ggf. die Flasche zusätzlich zu stützen, kann nach einer weiteren Ausgestaltung der Erfindung vorgesehen sein, dass das Stütz- und Halteelement mit einem ggf. lösbar verbindbaren zusätzlichen Halteelement für den Behälterbauch ausgerüstet ist.

Die Erfindung ist nachstehend anhand der Zeichnung beispielsweise näher erläutert. Diese zeigt in
Fig. 1 als Beispiel die Aufsicht auf den Flaschentransport durch eine Flaschenabfüllanlage,
Fig. 2 eine vereinfachte räumliche Darstellung der Manipulation der erfindungsgemäßen Halteelemente,
Fig. 3 Aufsicht auf ein erfindungsgemäßes Halteelement in vereinfachter Darstellung,
Fig. 4 eine Seitenansicht des Halteelementes etwa gemäß Pfeil IV in Fig. 3 sowie in
Fig. 5 eine Seitenansicht des Halteelementes etwa in der Darstellung gemäß Fig. 4 mit zusätzlich positionierter Fußstütze.

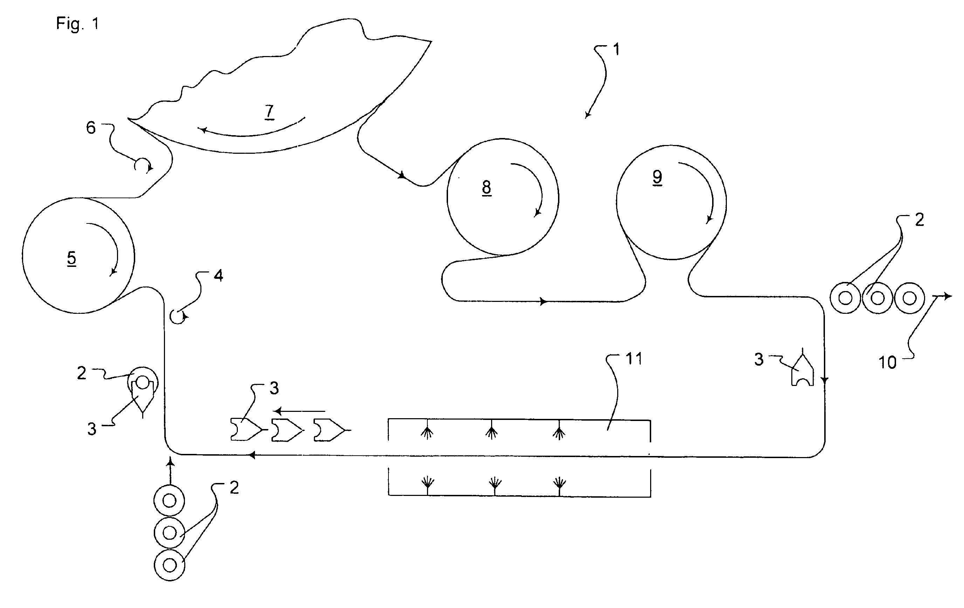

Einer in Fig. 1 schematisch angedeuteten Anlage, allgemein mit 1 bezeichnet, werden die Flaschen 2 entsprechend zugeführt und mit den erfindungsgemäßen Halteelementen 3 vereinigt und so weitergefordert. Durch einen gekringelten Pfeil 4 ist angedeutet, dass die Flaschen vor dem mit 5 bezeichneten Rinser auf den Kopf gedreht werden, nach Verlassen des Rinsers 5 werden die Flaschen zurückgedreht, was über einen gekrümmten Pfeil 6 angedeutet ist. Danach werden die Flaschen dem mit 7 bezeichneten Füller zugeführt, verlassen diesen und werden zu einer Verschlleßeinrichtung 8 gefördert, schließlich zu einer Etikettiermaschine 9 und verlassen die Anlage, was mit einem Pfeil 10 angedeutet Ist.

Nunmehr werden die auf dem gesamten Transport jeder Flasche 2 zugeordneten Halteelemente 3 rückgeführt und durchlaufen dabei eine Waschanlage, was mit 11 angedeutet ist.

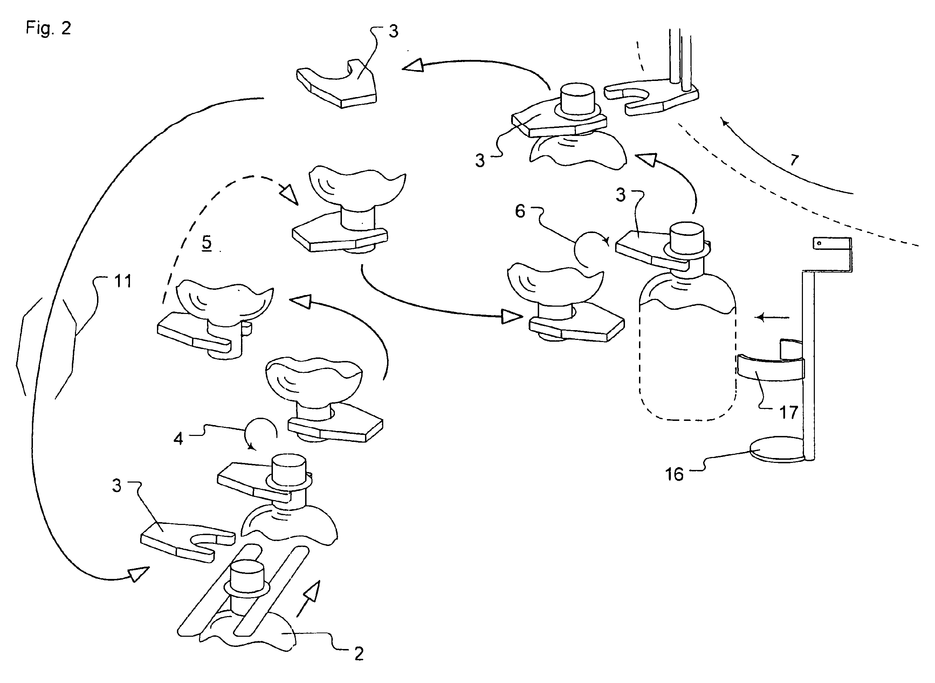

In Fig. 2 ist in räumlicher Darstellung ein ähnlicher Durchlauf, wie in Flg. 1 angedeutet. Die entsprechenden Anlageteile sind gleich bezeichnet bzw. anhand eines Pfeils definiert.

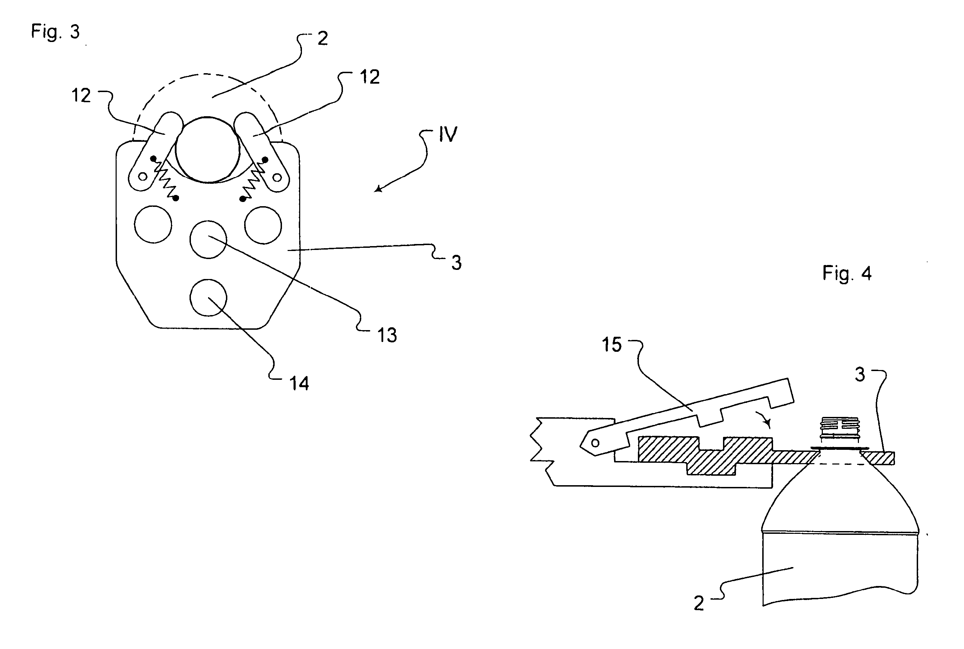

In den Fig. 3 bis 5 das Halteelement und verschiedene Situationen in vereinfachter Darstellung wiedergegeben. Das Halteelement 3 weist bei dem Ausführungsbeispiel in der Fig. 3 zwei federbelastete Verschlussarme 12, die über nicht näher dargestellte Steuerzapfen od. dgl. geöffnet oder geschlossen werden können und die Flasche 2 im Halteelement 3 fixieren.

Im Halteelement können Nocken 13 oder Vertiefungen 14 vorgesehen sein.

Im Halteelement können Nocken oder Vertiefungen 14 vorgesehen sein, die von einem in Fig. 4 mit 15 bezeichneten, entsprechend entgegengesetzt geformten Klammerelement ergriffen werden können, um so das Halteelement 3 an einem Fördermittel, einer Maschine od. dgl. zu fixieren, wobei die Erfindung auf die hier dargestellte konstruktive Gestaltung nicht beschränkt ist.

Das Halteelement 3 kann auch mit symmetrischen Greifeinsätzen auf beiden Seiten der Verschlussarme versehen sein, um so ein rechtsseitiges und linksseitiges Ergreifen des Halteelementes 3 in unterschiedlichen Anlagesituationen zu ermöglichen.

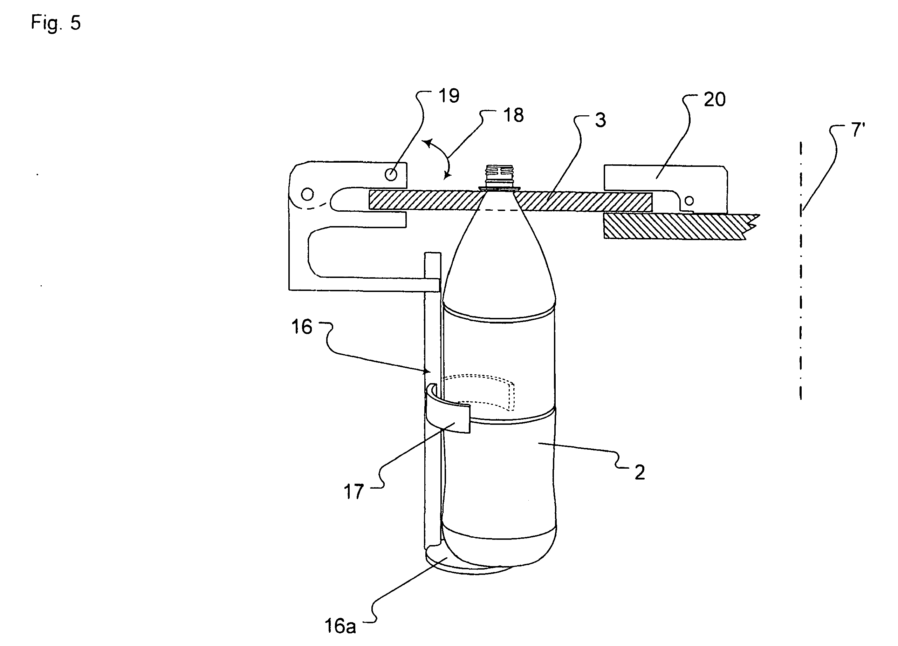

In Fig. 5 ist die Möglichkeit dargestellt, eine Flasche 2 zusätzlich mit einer am Halteelement 3 lösbar fixierten Fußstütze 16 mit einem Träger 16a auszurüsten, wobei an der Fußstütze 16 im Bauchbereich der Flasche auch eine mit 17 bezeichnete Bauchstütze vorgesehen sein kann. Zum Anklemmen der Fußstütze 16 ist ein Klemmmechanismus vorgesehen, was mit einem Doppelpfeil 18 angedeutet ist, wobei ein Steuerzapfen 19 vorgesehen sein kann, um die entsprechende Klammer zu schließen und zu öffnen.

Eine solche Fußstütze 16 bietet sich insbesondere dann an, wenn die Flasche 2 dem Füller zugeführt wird, wobei in Fig. 5 die Drehachse des Füllers mit 7' bezeichnet ist. Die im Füller vorgesehene Maschinenklammer trägt das Bezugszeichen 20.

Natürlich ist das beschriebene Ausführungsbeispiel der Erfindung noch in vielfacher Hinsicht abzuändern, ohne den Grundgedanken zu verlassen. So ist die Erfindung insbesondere nicht auf Art und Gestaltung der Flaschen eingeschränkt, ob mit oder ohne Neck-Ring u. dgl. mehr.

## Patentansprüche

1. Halte- und Klammersystem, umfassend Halteelemente (3) zur Handhabung von Behältern (2), insbesondere von Flaschen aus einem Ku nststoff, wie z.B. PP oder PET, oder von Beutelverpackungen mit Verschlusselementen, während des Transportes durch eine Abfüllanlage (1) od. dgl., wobei das Halteelement(3) beim Transport den Behälter (2) im Hals- oder Mündungsbereich hält und an dem Behälter (2) beim Transport über unterschiedliche Behandlungsvorrichtungen (5, 6, 7, 8, 9) verbleibt und mit Klammerelementen (15, 20) zusammen wirkt, die an eigenständig antreibbaren Transport- und Fördermittel angebracht sind, **dadurch gekennzeichnet, dass** das Halteelement (3) an dem Klammerelementen mindestens zeitweise kraft- und/oder formschlüssig gehalten werden kann, und von diesem wieder gelöst werden kann, und den Behälter (3) unterhalb der Behaltermündung derart umschließt, dass die Mündung offen und für Behandlungsmedien zugänglich ist.

2. Halte- und Klammersystem nach Anspruch 1, **dadurch gekennzeichnet, dass** das Halteelement (3) Nocken (13) und/oder Vertiefungen (14) aufweist, die von einem entsprechend entgegengesetzt geformten jeweiligen Klammerelement ergriffen werden können.

3. Halte- und Klammersystem nach Anspruch 1 oder 2, **dadurch gekennzeichnet, dass** das Halteelement zwei unterschiedliche Selten oder Bereiche ausweist, an welchen das Klammerelement verbindbar ist.

4. Halte- und Klammersystem nach einem der vorstehenden Ansprüche, **gekennzeichnet durch** eine Fixiereinrichtung zur Befestigung eines lösbar verbindbaren Stützelementes (16) zur wenigstens zeitweisen Mltführung mit dem Halteelement (3), wobei das Stützelement (16) einen Träger (16a) für den Behälterboden aufweist.

5. Halte- und Klammersystem nach Anspruch 4, **dadurch gekennzeichnet, dass** der Träger (16a) als den Behälterboden ganz oder tellweise überdeckendes Maschinenelement ausgebildet Ist.

6. Halte- und Klammersystem nach Anspruch 4 oder 5, **dadurch gekennzeichnet, dass** die Trägerfläche (16a) für den Behälterboden als Wechsel-Verschlelßteil ausgebildet ist.

7. Halte- und Klammersystem nach Anspruch 4 oder einem der folgenden, **dadurch gekennzeichnet, dass** die Trägerfläche (16a) für den Behälterboden aus einem gleitfähigen Material gebildet ist.

8. Halte- und Klammersystem nach Anspruch 4 bis 7 oder einem der folgenden, **dadurch gekennzeichnet, dass** das Stütz- und Halteelement (16) mit einem ggf. lösbar verbindbaren zusätzlichen Halteelement (17) für den Behälterbauch ausgerüstet ist.

9. Verfahren zur Handhabung von Behältern, insbesondere von Flaschen aus einem Kunststoff, wie z.B. PP oder PET, oder von Beutelverpackungen mit Verschlusselementen, während des Transportes durch eine Abfüllanlage od. dgl., die mindestens eine Behandlungsvorrichtung, wie einen Füller, einen Verschließer, eine Inspektionsvorrichtung, einen Etlkettierer od. dgl. umfasst, wobei die Behälter zwischen den Behandlungsvorrichtungen in Übergabebereichen direkt oder mittels Transportvorrichtungen, wie Transportsterne, Transportbänder od. dgl. übergeben werden, **dadurch gekennzeichnet, dass** ein Halte- und Klammersystem nach einem der vorstehenden Ansprüche verwendet wird, wobei die Behälter (2) mit jeweils mindestens einem Halteelement (3) versehen werden, wobei während der weiteren Förderung des Behälters (2) dieses Halteelement (3) an dem Behälter (2) mindestens auf einer Teilstrecke verbleibt und unmittelbar bewegt und manipuliert wird, wobei die eine Teilstrecke mindestens über einen Übergabebereich verläuft und der Behälter (2) und das Halteelement (3) am Ende des Behandlungsvorganges oder der Tellstrecke voneinander getrennt werden

10. Verfahren nach Anspruch 9, **dadurch gekennzeichnet, dass** das Halteelement den Behälter mindestens im Hals- oder Verschlussbereich hält.

11. Verfahren nach Anspruch 9 oder 10, **dadurch gekennzeichnet, dass** das Halteelement in der Anlage alle zur Förderung notwendigen Bewegungen vollzieht, insbesondere dreidimensional bewegt wird.

12. Verfahren nach einem der vorangehenden Ansprüche 9 bis 11, **dadurch gekennzeichnet, dass** das Halteelement im Rlnser, im Füller, im Verschließer, im Etikettierer u, dgl. mit dem zugeordneten Behälter gefördert wird, wobei Dreh- und Schwenkbewegungen des Halteelementes einschließlich des Behälters durchgeführt werden.

13. Verfahren nach einem der vorangehenden Ansprüche 9 bis 12, **dadurch gekennzeichnet, dass** das Halteelement zwischen Behälterentnahme und neuerlicher Behälteraufnahme durch eine Reinigungsstrecke geführt wird.

14. Verfahren nach einem der vorangehenden Ansprüche 9 bis 13, **dadurch gekennzeichnet, dass** bei Wechsel der Behälterformate die den Formaten entsprechenden Halteelemente ausgetauscht werden.

15. Verfahren nach Anspruch 14, **dadurch gekennzeichnet, dass** die ausgetauschten Halteelemente einer Parkzone, einem Magazin od. dgl. zugeführt werden.

## Claims

1. Retainer and clamp svstem, comprising retainer elements (3) for handling containers (2), in particular bottles made from a plastic material such as, for example, PP or PET, or bag packagings with sealing elements, during transport thereof through a filling station (1) or similar, wherein the retainer element (3) during transport retains the container (2) in the neck region or mouth region and remains at the container (2) during transport via different handling devices (5, 6, 7, 8, 9) and interacts with clamp elements (15, 20) attached to independently drivable transport and conveying means, **characterised in that** the retainer element (3) can be retained at the clamp elements at least intermittently by force fit and/or form fit and detached from it again, and surrounds the container (3) underneath the container mouth such that the mouth is open and accessible for treatment media.

2. Retainer and clamp system according to claim 1, **characterised in that** the retainer element (3) features cams (13) and/or depressions (14) which can be gripped by a respective clamp element having a corresponding opposite shape.

3. Retainer and clamp system according to claim 1 or 2, **characterised in that** the retainer element has two different sides or areas to which the clamp element can be connected.

4. Retainer and clamp system according to any one of the above claims, **characterised by** a fixing device for attaching a detachably connectable support element (16) for at least intermittent carriage with the retainer element (3), wherein the support element (16) features a carrier (16a) for the container bottom.

5. Retainer and clamp system according to claim 4, **characterised in that** the carrier (16a) is designed as a machine element that fully or partly covers the container bottom.

6. Retainer and clamp system according to claim 4 or 5, **characterised in that** the carrier surface (16a) for the container bottom is designed as a replacement part/wearing part.

7. Retainer and clamp system according to claim 4 or one of those following, **characterised in that** the carrier surface (16a) for the container bottom is formed by a slidable material.

8. Retainer and clamp system according to claims 4 to 7 or one of those following, **characterised in that** the support and retainer element (16) is equipped with an additional retainer element (17) for the container belly, said retainer element being detachably connectable if required.

9. Method for handling containers, in particular bottles made from a plastic material such as, for example, PP or PET, or bag packagings with sealing elements, during transport thereof through a filling station or similar, comprising at least one handling device, such as a filler, a closer, an inspection device, a labeller or similar, wherein the containers are transferred between the handling devices directly in transfer regions or by means of transport devices, such as transport star wheels, transport belts or similar, **characterised in that** a retainer and clamp system according to one of the above claims is used, wherein the containers (2) are each equipped with at least one retainer element (3), wherein, during the further conveyance of the container (2), this retainer element (3) remains at the container (2) at least for a part of the run and is directly moved and manipulated, wherein the part of the run extends at least over a transfer region and the container (2) and the retainer element (3) are separated at the end of the handling process or the end of the part run.

10. Method according to claim 9, **characterised in that** the retainer element retains the container at least in the neck region or closing region.

11. Method according to claim 9 or 10, **characterised in that** the retainer element in the station performs all movements necessary for conveying, in particular is moved three-dimensionally.

12. Method according to any one of the preceding claims 9 to 11, **characterised in that** the retainer element in the rinser, in the filler, in the closer, in the labeller and similar is conveyed with the allocated container, wherein rotary and pivoting movements of the retainer element including the container are performed.

13. Method according to any one of the preceding claims 9 to 12, **characterised in that** the retainer element is guided between container removal and container re-reception through a cleaning section.

14. Method according to any one of the preceding claims 9 to 13, **characterised in that**, during changeover of the container formats, the retainer elements corresponding to the formats are exchanged.

15. Method according to claim 14, **characterised in that** the exchanged retainer elements are supplied to a parking zone, a magazine or similar.

## Revendications

1. Système d'arrêt et de retenue, comprenant des éléments de retenue (3) pour la manipulation de contenants (2), en particulier de bouteilles en une matière plastique telle que du PP ou PET ou de sachets d'emballage avec des éléments de fermeture pendant le transport au travers d'une installation de remplissage (1) ou similaire, l'élément de retenue (3) maintenant le contenant (2) lors du transport dans la zone du goulot ou de l'ouverture et restant sur le contenant (2) lors du transport au travers de différents dispositifs de traitement (5, 6, 7, 8, 9) et coagissant avec des éléments de retenue (15, 20) qui sont montés sur des moyens de transport et de convoyage pouvant être entraînés de manière autonome, **caractérisé en ce que** l'élément de retenue (3) peut être maintenu à force et/ou par complémentarité de formes au moins temporairement sur l'élément de serrage et peut être détaché de nouveau de celui-ci, et entoure le contenant (3) sous son ouverture de telle manière que l'ouverture soit ouverte et accessible aux fluides de traitement.

2. Système d'arrêt et de retenue selon la revendication 1, **caractérisé en ce que** l'élément de retenue (3) présente des cames (13) et/ou des cavités (14) qui peuvent être saisies par un élément de retenue respectif formé de manière opposée en conséquence.

3. Système d'arrêt et de retenue selon la revendication 1 ou 2, **caractérisé en ce que** l'élément de retenue présente deux côtés ou zones différentes, sur lesquelles l'élément de serrage peut être relié.

4. Système d'arrêt et de retenue selon l'une quelconque des revendications précédentes, **caractérisé par** un dispositif de fixation pour la fixation d'un élément d'appui (16) pouvant être relié de manière amovible pour l'entraînement au moins temporaire avec l'élément de retenue (3), l'élément d'appui (16) présentant un support (16a) pour le fond de contenant.

5. Système d'arrêt et de retenue selon la revendication 4, **caractérisé en ce que** le support (16a) est réalisé comme un élément de machine recouvrant entièrement ou en partie le fond de contenant.

6. Système d'arrêt et de retenue selon la revendication 4 ou 5, **caractérisé en ce que** la surface porteuse (16a) pour le fond de contenant est réalisée comme une partie interchangeable/d'usure.

7. Système d'arrêt et de retenue selon la revendication 4 ou l'une quelconque des revendications suivantes, **caractérisé en ce que** la surface porteuse (16a) pour le fond de contenant est constituée d'un matériau glissant.

8. Système d'arrêt et de retenue selon la revendication 4 à 7 ou l'une quelconque des revendications suivantes, **caractérisé en ce que** l'élément d'appui et d'arrêt (16) est équipé d'un élément d'arrêt (17) supplémentaire pouvant être éventuellement relié de manière amovible pour la partie ventrale de contenant.

9. Procédé de manipulation de contenants, en particulier de bouteilles en une matière plastique telle que du PP ou PET, ou de sachets d'emballage avec des éléments de fermeture pendant le transport au travers d'une installation de remplissage ou similaire, qui comporte au moins un dispositif de traitement tel qu'une installation de remplissage, une installation de fermeture, un dispositif d'inspection, une étiqueteuse ou similaire, les contenants étant remis directement entre les dispositifs de traitement dans des zones de remise ou à l'aide de dispositifs de transport tels que des étoiles de transport, des bandes transporteuses ou similaire, **caractérisé en ce qu'**un système d'arrêt et de retenue selon l'une quelconque des revendications précédentes est utilisé, les contenants (2) étant pourvus respectivement d'au moins un élément d'arrêt (3), cet élément d'arrêt (3) sur le contenant (2) restant et étant déplacé et manipulé directement pendant la suite du transport du contenant (2) au moins sur un tronçon, le tronçon s'étendant au moins sur une zone de remise et le contenant (2) et l'élément d'arrêt (3) étant séparés à la fin du processus de traitement ou du tronçon.

10. Procédé selon la revendication 9, **caractérisé en ce que** l'élément d'arrêt tient le contenant au moins dans la zone du goulot ou de fermeture.

11. Procédé selon la revendication 9 ou 10, **caractérisé en ce que** l'élément d'arrêt dans l'installation exécute tous les mouvements nécessaires au transport, en particulier est déplacé en trois dimensions.

12. Procédé selon l'une quelconque des revendications 9 à 11, **caractérisé en ce que** l'élément d'arrêt est transporté dans l'installation de rinçage, l'installation de remplissage, dans l'installation de fermeture, dans l'étiqueteuse et similaire avec le contenant associé, des mouvements de rotation et de pivotement de l'élément d'arrêt, y compris du contenant, étant réalisés.

13. Procédé selon l'une quelconque des revendications 9 à 12, **caractérisé en ce que** l'élément d'arrêt traverse un tronçon de nettoyage entre le retrait de contenant et la nouvelle réception de contenant.

14. Procédé selon l'une quelconque des revendications 9 à 13, **caractérisé en ce que** lors du changement des formats de contenant, les éléments d'arrêt correspondant aux formats sont remplacés.

15. Procédé selon la revendication 14, **caractérisé en ce que** les éléments d'arrêt remplacés sont amenés à une zone de stationnement, un magasin ou similaire.
